# EUROPEAN PATENT APPLICATION

(11) **EP 4 851 638 A1**
(43) Date of publication of application: **09.12.2026**
(21) Application number: 25181065.1
(22) Date of filing: 05.06.2025
(51) Int. Cl.: G01N 35/10

(54) **IVD DEVICE AND AUTOMATED METHOD FOR PIPETTING FROM CLOSED LIQUID CONTAINERS**

(71) Applicant: Roche Diagnostics International AG, 6343 Rotkreuz (CH)
(72) Inventor: Engel, Thomas, 6343 Rotkreuz (CH); Keller, Reto, 6343 Rotkreuz (CH); Schaerer, Veronika, 6343 Rotkreuz (CH); Meier, Alexander Heinz, 6343 Rotkreuz (CH); Bachmair, Eveline, 6343 Rotkreuz (CH); Wang, Pengfei, 6343 Rotkreuz (CH); Wiss, Jerome, 6343 Rotkreuz (CH)
(74) Representative: Curcio, Mario

(57) **Abstract**

The present disclosure relates to an in-vitro diagnostic device (100) and an automated method for aspirating a liquid (1) from a closed liquid container (10) and for equilibrating a possible pressure difference between the inside of the closed liquid container (10) and its surrounding. The IVD device (100) comprises a pipetting unit (110) comprising a pipetting probe (24), a venting conduit (32) and a pressure sensor (70). The IVD device (100) further comprises a controller (90) configured to control the IVD device (100) to perform a plurality of processing steps, including stopping movement of the pipetting probe (24) upon detecting a pressure difference between the inside of the liquid container (10) and its surrounding above a predetermined pressure threshold and switching the venting valve (30) to an open position to equilibrate the pressure difference.

## Description

### TECHNICAL FIELD

The present disclosure relates to an in-vitro diagnostic device and an automated method for aspirating a liquid from a closed liquid container and for equilibrating a possible pressure difference between the inside of the closed liquid container and its surrounding.

### BACKGROUND

Automated in-vitro diagnostic (IVD) devices rely on precise and accurate aspiration and dispensation of liquids to ensure reliable analytical results. For example, in the field of automated coagulation analyzers, it is important to achieve a precise ratio of sample volume and reagent volume in order to generate measurement results that are correctly interpretable in a medical context and that allow health care professionals to derive accurate diagnoses.

Aspiration or dispensation of liquids is specifically challenging if the liquids are stored inside closed liquid containers. In order to aspirate from or dispense into closed liquid containers, IVD devices may be equipped with piercing members that allow piercing through the lid of the closed liquid container. In certain teachings in the art, the pipetting probe itself fulfills the function of both a piercing member and an aspiration/dispensation needle, allowing it to pierce through the lid of the closed liquid container and to either aspirate liquid from the liquid container or to dispense liquid into the liquid container.

When aspirating from or dispensing into a closed liquid container, pressure differences may be present between the inside of the closed liquid container and its surrounding. This poses a challenge because it consequently affects the pressure inside the pipetting probe when piercing through the lid, thereby reducing the accuracy and reliability of liquid aspiration or dispensation. Overpressure or underpressure inside the liquid container can occur during manufacturing or sample collection and sample preparation, e.g. during the filling procedure of reagent cassettes, during pre-analytical manipulations, e.g. re-capping of sample containers, or during blood sample collection, among others.

Experiments showed that splashes of liquid occurred around the lid of the closed liquid container if the pressure inside the liquid container was at least 200 millibars higher than the surrounding pressure. The reason for the splashes is that liquid material that collects on the exterior surface of the pipetting probe during aspiration is wiped off on the inside of the lid while the pipetting probe is moved out of the closed liquid container. Due to the pressure difference, the wiped off liquid droplets are pushed through the puncture in the lid and are dispersed into the liquid container's surrounding. This can lead to cross-contamination, e.g. between patient samples, especially if open sample containers are located in close vicinity of the closed liquid container. Also, splashes of liquid material may lead to contamination of surrounding instrument parts, which then need to be cleaned manually, thereby increasing the number of manual interactions with the IVD device by an operator.

One known approach to overcome this problem is to measure the pressure inside closed liquid containers, e.g. via the pipetting probe. In case of pressure differences above a certain threshold, the affected liquid containers are removed from the IVD device in order to manually remove their lids. Afterwards, the liquid containers are re-inserted into the IVD device again. This approach does not only increase the manual interaction steps with the IVD device, but also decreases throughput, delays the result output, and shortens the walk-away time, ultimately leading to higher overall laboratory costs. Furthermore, the risk for the operator being contaminated and/or exposed to potentially infectious biological material is increased.

Another known approach is to install a dedicated venting system. For example, patent US 8,758,702 B2 discloses a telescoping closed-tube sampling assembly, comprising a sample probe concentrically housed within a piercing probe and a venting mechanism. This solution however requires additional hardware adaptations. In another example, patent US 5,853,665 A discloses an apparatus for automatically drawing a blood sample from a sealed container, where the apparatus comprises an aspirating needle which serves to pierce the sealed container and to vent the interior of the container to the surrounding atmosphere through a suitable vent line connected to the needle. Similar to the case above, this solution requires hardware adaptations, namely an aspiration needle containing two chambers and needle apertures located in the vicinity of the needle tip. Additional structural elements in the needle, such as apertures or separating walls, can be of disadvantage with regard to pipetting precision and carry-over.

Patent application EP 452892 A2 discloses a device configured to aspirate from closed sample containers and to equilibrate pressure in the sample containers to atmospheric prior to aspiration. The device includes a needle probe for aspirating a sample from open or closed sample containers, where the probe is connected to receive fluid through a tube, which is connected through a 2-way valve to a pump. The second outlet of the valve is connected to a vent to atmosphere. As the tip of the needle probe penetrates the rubber cap of the tube and exits the other side, and before entering the serum, a command signal is sent to the pump to withdraw all system fluid in the needle probe conduit back through the pump valve. The valve is switched by the controller to place the conduit in communication with atmospheric pressure and to thereby permit the vacuum inside the tube above the serum level to equilibrate. Then, the controller switches the valve back to the pump and aspirates sample. The device and method proposed in EP 452892 A2 have the disadvantage that the pressure equilibration procedure is performed on every sample container, even if equilibration were not necessary. Also, the system fluid inside the fluidic system between the probe and the valve needs to be removed before the equilibration can take place. This prolongs the handling time for each sample and has a negative impact on throughput.

### GENERAL DESCRIPTION

It is against the above background that aspects of the present disclosure provide certain unobvious advantages and advancements over the prior art. A need was recognized for an improved device and method for aspirating a liquid from a closed liquid container while ensuring precise liquid aspiration in the event of pressure differences between the inside of the closed liquid container and its surrounding.

Although the aspects of the present disclosure are not limited to specific advantages or functionality, it is noted that the teaching of the present disclosure allows for an efficient venting or equilibration of a closed liquid container in case of pressure differences between the inside of the liquid container and its surroundings, particularly if the pressure difference relates to an overpressure inside the closed liquid container. In consequence, splashes of liquid can be avoided that otherwise might occur when the pipetting probe is pulled out of the closed liquid container, thus preventing cross-contamination. In addition, the risk of pipetting errors is reduced, while the reliability, precision and accuracy of the pipetting operations is ensured.

Another advantage of the teaching of the present disclosure is that it provides a simple and cost-effective construction, without adding complexity to the pipetting unit or IVD device.

Yet another advantage of the teaching according to certain aspects is that it provides for a reliable and more efficient liquid handling workflow, thus improving throughput of the IVD device. It further reduces the need of manual interventions, thereby decreasing an operator's risk of contamination. The teaching according to certain aspects further includes a fail-safe check, to avoid that pressure equilibration is performed when not suitable, i.e. when the pipetting probe is immersed in the liquid, thereby preventing contamination of device parts and enhancing the reliability of the device.

In a general aspect, the present disclosure relates to an IVD device according to independent claim 1.

In a second general aspect, the present disclosure relates to an automated method for aspirating a liquid from a closed liquid container according to independent claim 11.

The term "in-vitro diagnostic device" or "IVD device" as used herein refers to any kind of automated analytical device, pre-analytical device, post-analytical device or combinations thereof. An analytical device is configured to obtain an analytical measurement value from a patient's sample in vitro in order to provide information on the health status of the patient. Analytical measurement values may comprise a qualitative and/or quantitative measure of analytes in the sample, and/or they may comprise information on the physical, chemical, physiological, or immunological property of the sample. The analytical device is configured to automatically or semi-automatically conduct a set or sequence of processing steps customized to the respective type of analysis (e.g. coagulation, hematology, clinical chemistry, immunochemistry). Processing steps may include pipetting (aspirating and/or dispensing), incubating, transporting, mixing, heating, cooling, measuring, detecting, cleaning, etc. A pre-analytical device is configured to prepare the samples or the sample containers holding the samples to the extent that an analytical device can process them afterwards. This can include processing steps such as loading/unloading of any type of liquid containers (e.g. sample containers, reagent containers), loading/unloading of consumables, decapping, preliminary checks of the sample quality, fill-level checks, pipetting (aspirating and/or dispensing), aliquoting, centrifuging, labelling, sorting, incubating, etc. A post-analytical device on the other hand is configured to process sample containers after they have been analyzed by the analytical device. This can include processing steps such as transferring samples to storage vessels, (re-)capping, labelling, fixing, archiving/storing, discarding. An IVD device can be operated as stand-alone device or in conjunction with one or more other in-vitro diagnostic devices.

An IVD device typically comprises a plurality of functional units, cooperating with each other in order to enable automated sample processing and analysis. Each functional unit may therefore be configured to perform one or more specific processing steps. A functional unit may for example be a pipetting unit, a liquid reservoir, a pump, a valve, a conveyor, a gripper, an incubator, an analytical measurement unit, a temperature regulating unit, a controller, etc.

The term "pipetting unit" as used in the present disclosure may refer to a functional unit of the IVD device configured for aspirating a volume of liquid from a liquid container and/or dispensing a volume of a liquid into a liquid container, where the volume of dispensed liquid may be different from the volume of aspirated liquid. As is known in the art, the term "pipetting" can refer to both the actions of aspirating or dispensing. The pipetting unit may be movable by a translation mechanism in one or two directions of travel in a plane, such as with guiding rails, and possibly in a third direction of travel orthogonal to the plane of translation, for example with a spindle drive. Alternatively, the pipetting unit may be moved by a rotational mechanism along a fixed circular path or part of circular path, and possibly in a third direction of travel orthogonal to the plane of rotation. In another alternative, the pipetting unit may be in a fixed position and the liquid container may be movable by a translation mechanism relative to the fixed pipetting unit. Combinations of the above movement options are also possible.

According to the present disclosure, the pipetting unit comprises at least one pipetting probe. The pipetting probe may be embodied as a reusable washable hollow needle, made of any type of material suited for re-use and inert against the type of liquid being pipetted, e.g. steel, durable plastic, glass, hardened polymeric or composite material, etc. Alternatively, the pipetting probe may comprise a nozzle to which a replaceable pipette tip can be attached. The replaceable pipette tip can be removed from the nozzle and disposed of after the pipetting procedure of a liquid has been completed. Alternatively, the pipetting unit may comprise a plurality of pipetting probes, where different pipetting probes may be used for different purposes, e.g. for pipetting of different types of liquids. Using a plurality of pipetting probes allows for parallelization of pipetting operations, thereby increasing the device's throughput.

According to the present disclosure, the pipetting probe is configured to pierce through a lid of a closed liquid container, allowing to aspirate liquid therefrom without having to remove the lid. Automatic removal of the lid from a closed liquid container does not only require additional processing steps, which reduces the IVD device's throughput, but also carries the risk of contaminating instrument parts surrounding the liquid container or other liquid containers in close proximity through spilling and/or splashing. Further, removing the lid from a closed liquid container may have a negative effect on the liquid's stability, thereby reducing the liquid's in-use time, i.e. the time period in which the liquid may be used before it expires.

The pipetting probe may have an elongated, tubular and/or tapered shape with at least one opening at or near a tip of the probe that leads to a hollow inner channel. The hollow inner channel leads through the probe and emerges at an opposite end of the probe. For example, the probe can be designed as a hollow needle with a sharpened tip to facilitate piercing through the lid of the closed liquid container. Further, the probe may be fluidically connected from its opposite end to a fluid supply, which is described in more detail below. The pipetting probe may be designed as multi-use probe that requires to be cleaned regularly in order to prevent cross-contamination or it may be designed as single-use probe that is exchanged between different pipetting procedures, s. attachable pipette tips described above. The longitudinal orientation of the pipetting probe may be in a vertical direction or it may be at an angle to a vertical axis.

The lid of the liquid container may comprise or be entirely made of a pierceable elastomeric material. The elastomeric material is intended to allow piercing, e.g. by the pipetting probe, without losing its sealing properties, i.e. it almost completely reverts to its initial shape once the piercing object is removed. The elastomeric material's sealing properties prevent liquid evaporation, contamination from the environment, and spillage of liquid.

According to the present disclosure, the pipetting probe is further configured to move relative to the closed liquid container. Typically, a pipetting probe in an IVD device is configured to perform different processing steps at different positions within the IVD device. For example, liquid aspiration may be conducted at a first position in the IVD device, e.g. at a sample input station or at a reagent station, whereas liquid dispensation may be conducted at a second position different from the first position, e.g. at a measurement unit. Washing of the pipetting probe may be conducted at yet another position, e.g. at a wash station. This can be achieved by implementing the pipetting probe as movable functional unit. The pipetting probe may move between positions in translational movements horizontally, i.e. in a Cartesian x-direction and/or y-direction. Alternatively, it may move horizontally in a rotational movement. Additionally, the pipetting probe is configured to move in a translational vertical movement, i.e. in a Cartesian z-direction, e.g. to lower the pipetting probe into a sample container, into a reagent container, into a wash station, etc. Movement of the pipetting probe may be enabled by conventional actuators known to the skilled person, e.g. a stepper motor, a servo motor, a linear actuator, a pneumatic actuator, a hydraulic actuator, a DC motor with lead screw, a solenoid actuator, a piezoelectric motor, etc. The pipetting probe may be movably attached to the pipetting unit. In a pipetting unit with two or more pipetting probes, the pipetting probes may be movably attached to the pipetting unit so that they can be driven individually. Alternatively, the pipetting probe may be fixedly attached to the pipetting unit and the pipetting unit itself may be actuated to move relative to a fixed position in the IVD device, e.g. a closed liquid container.

According to an aspect of the present disclosure, the pipetting probe is electrically conductive and configured to discriminate between a gaseous and a liquid probe environment. "Electrical conductivity" as used in the present disclosure refers to a material's ability to conduct an electric current, which depends on the availability and density of mobile charge carriers. For example, materials may be considered electrically conductive if they present a specific conductivity of >20 µS/cm. Materials for certain components of an IVD device may be selected based on their electrically conductive properties so that an electrical signal can be applied to them. For example, when referring to an electrically conductive probe, the probe may at least in part be made of an electrically conductive material such as a metallic material like stainless steel, a conductive plastic material or the like. This allows using the probe not only to aspirate and/or dispense liquids, but also to detect when it makes contact with a liquid, in other words to discriminate between being in a gaseous or liquid environment. For example, in order to minimize the risk of cross-contamination and facilitate probe cleaning, it is desirable to position the tip of the probe just below the liquid surface of the liquid sample. To ensure reliable probe positioning it is therefore advantageous to detect when the probe reaches the surface of the liquid. There are different methods for detecting the presence of a liquid surface, which are well known in the art and will not be described in detail here. Examples of such detection methods are capacitive detection methods, resistive or conductive detection methods, or the measurement of changes in inductance. These detection methods represent a non-exhaustive selection of possible forms of implementation and may be applied individually or in combination.

According to the present disclosure, the pipetting probe is fluidically connected to a probe conduit and the pipetting unit comprises a venting conduit fluidically connected to the probe conduit and comprising a venting valve switchable between an open position and a closed position. According to the present disclosure, the IVD device further comprises a system fluid reservoir fluidically connected to the probe conduit via a fluidic conduit for providing a system fluid into the probe conduit and into the pipetting probe. The term "fluidically connected" as used in the present disclosure relates to a connection between two or more functional units or components of an IVD device that enables the transport of fluids or liquids between them, e.g. between a system fluid reservoir and a pipetting probe. Typically, the fluid connections are hermetically sealed to prevent a fluid transported through the fluid connection from leaking. The terms "fluidic conduit", "venting conduit", and "probe conduit" as referred to in the present disclosure may be any kind of element with an inner hollow channel through which a fluid can be moved, typically an elongated element like a tube, pipe, duct etc. The conduit may contain gaseous and liquid fluid at the same time, e.g. a system fluid and (an) air gap(s) that prevent aspirated liquid from mixing with the system fluid. Pumps and/or valves may be fluidically connected to the conduits. The conduit can be made of any material, e.g. a flexible material, like silicone, etc., or a rigid material, like metal or glass etc., ideally with inert properties towards the fluid being moved inside in order to prevent interaction with or contamination of the fluid. The terms "fluidic conduit", "venting conduit", and "probe conduit" may refer to parts or segments of the same physical conduit. For example and according to the present disclosure, the "probe conduit" refers to the conduit segment that is comprised in the pipetting unit, and the "fluidic conduit" refers to the conduit segment that establishes fluidic connection to the system fluid reservoir and is not comprised in the pipetting unit.

The term "fluid" as used herein is a generic term to indicate any type of liquid and/or gaseous material that is processed in an IVD device. It can refer to a liquid that is sought to be analyzed, e.g. a sample. A sample can be any biological material suspected of containing one or more analytes or having physical or chemical characteristics, the detection of which - qualitative and/or quantitative - may be associated to a medical condition. It can be derived from any biological source, such as a physiological fluid, including, blood, saliva, sputum, ocular lens fluid, cerebral spinal fluid (CSF), sweat, urine, milk, ascites fluid, mucous, synovial fluid, peritoneal fluid, pleural fluid, amniotic fluid, tissue, bone marrow, feces, cells or the like.

The term "fluid" can further refer to liquids that are required to react with or support the reaction with an analyte in a sample, e.g. a reagent or a buffer solution. It can refer to liquids that contain known levels of analytes and are used to check or confirm the IVD device's operability, e.g. a quality check (QC) sample, a calibrator or a reference solution. The term fluid can further refer to liquids that are used to bring or maintain the IVD analyzer in an operating mode, e.g. a cleaning solution or a system fluid. These types of fluids may be made available on the IVD device in bulk. It is common to use a liquid system fluid, e.g. water, as a hydraulic pressure transmission liquid for conducting pipetting operations in an IVD device. The fluidic system may however at least in part comprise gaseous inclusions, e.g. air bubbles between the liquid system fluid and the sample to separate and avoid contamination between the two liquids. The term "fluid" may therefore also refer to gaseous inclusions in an otherwise liquid fluid, e.g. ambient air, pressurized air, nitrogen or the like.

A "fluidic system" as referred to in the present disclosure is an arrangement of operatively connected functional units and/or components in an IVD device that enable or contribute to fluid handling, such components including for example any one or more of a fluid storage, a bubble trap and/or degasser, a pipetting unit, an evacuation unit, an evaporation unit, an incubation unit, a fluidic conduit, a pump, a valve, a sensor, e.g. a pressure sensor, etc. The particular arrangement depends on the setup and the function of a given IVD device or a given functional unit.

A "fluid reservoir" as referred to in the present disclosure can be any kind of container or reservoir that is designed to hold a certain type of fluid and that is configured to make the fluid accessible to the IVD device. The fluid supply may be an external fluid source, i.e. a separate unit outside of the IVD device but in fluidic connection therewith, e.g. a water supply in a laboratory. The fluid supply may further be a liquid container that is installed in the IVD device or that is temporarily provided to the IVD device, e.g. a sample container, reagent container or bulk liquid container. The term "system fluid reservoir" as used in the present disclosure refers to a fluid reservoir that contains and/or provides system fluid to the IVD device. According to an aspect of the present disclosure, the IVD device comprises a system fluid reservoir fluidically connected to the probe conduit via a fluidic conduit for providing a system fluid into the probe conduit and into the pipetting probe. A pump that is connected to the fluidic conduit may for example be used to transport the system fluid from the system fluid reservoir to the pipetting probe. System fluid may be used to rinse and clean the inner channel of the pipetting probe and thus prevent cross-contamination, and/or it may be used as hydraulic pressure transmission fluid to enable pipetting operations. Additionally or alternatively, system fluid may be used to wash the outer surface of the pipetting probe.

A "pump" as referred to in the present disclosure is any kind of functional unit that enables movement of a fluid in a confined space (e.g. in a fluidic conduit), possibly by creating a negative or positive pressure in that confined space. Depending on the application and the fluid volume that needs to be moved, different types of pumps can be used, e.g. piston pump, plunger pump, syringe pump, peristaltic pump, displacement pump, (micro-)gearwheel pump, etc. Since pumps are well known in the state of the art and widely used, especially in the field of IVD devices, their functional principle will not be described in further detail in this disclosure. A pump may also be used to establish and maintain a constant pressure inside the fluidic system or a part of the fluidic system, e.g. a pressure between 0.5 bar and 5 bar, or between 1 bar and 4 bar, or between 2 bar and 3 bar, or in particular of about 2.5 bar. For example, a gear pump may be used to transport system fluid from the system fluid reservoir into the fluidic conduit, which connects the system fluid reservoir to the probe conduit, and may be operated such that a constant pressure is maintained inside the fluidic conduit, e.g. in preparation for or during the wash procedure of the pipetting probes.

A "valve" as referred to in the present disclosure can be any kind of functional unit for directing, regulating or controlling fluids in a fluidic system by opening, closing or partially obstructing passages. Examples of commonly used valves are solenoid valves, isolation valves, proportional valves, rotary valves, etc. According to an aspect of the present disclosure, the venting valve, the probe valve, the system fluid valve, and the cleaner valve are solenoid valves, e.g. media separated solenoid valves. Since such elements are well known in the state of the art and are widely used, they will not be described in further detail in this disclosure. If the valve is in an open position according to the present disclosure, it is switched or positioned in a way that enables fluid passage. On the other hand, if the valve is in a closed position, it is switched or positioned in a way that prevents fluid passage. According to the present disclosure, the venting valve, the probe valve, the system fluid valve, and the cleaner valve are "switchable" between an open and a closed position. The valve may therefore be electrically activated, e.g. by applying a voltage, or operatively coupled to an actuator, e.g. an electric motor (such as a servo-motor, stepper motor), a hydraulic actuator, a solenoid actuator, a piezoelectric actuator, etc.

According to the present disclosure, the pipetting unit further comprises a pressure sensor. Various types of pressure sensing techniques are known in the art. The pressure sensor may be a resistive, a capacitive, a piezoelectric, an optical sensor, a sensor based on the MEMS technology (micro electro-mechanical system), or the like. Typically, piezoelectric pressure sensors are used in fluidic systems of IVD devices, such as e.g. in a pipetting unit. The pressure sensor is configured to detect pressure changes that occur at the tip of the pipetting probe. The pressure change occurring at the tip is thereby conveyed via system fluid through the pipetting probe and connected conduits to the pressure sensor, where it is detected.

According to an aspect of the present disclosure, the pressure sensor is operatively coupled to the probe conduit. According to a further aspect of the present disclosure, the pressure sensor is arranged in proximity of the pipetting probe, i.e. at a distance of ≤ 100 mm from the pipetting probe. For example, the pressure sensor may be arranged at a distance anywhere between 10 mm and 100 mm from the pipetting probe. In particular, the pressure sensor may be arranged at a distance anywhere between 50 mm and 100 mm from the pipetting probe. This allows the pressure sensor according to the present disclosure to have a high dynamic, i.e. a reaction time ≤ 1 millisecond, and the signal processing unit of the pressure sensor has a short response time, e.g. ≤ 1 millisecond.

According to the present disclosure, the IVD device comprises a controller. The term "controller" as used in the present disclosure refers to a programmable logic controller or processor running a computer-readable program provided with instructions to perform processing steps. The term can mean central processing units, microprocessors, microcontrollers, reduced instruction circuits (RISC), application specific integrated circuits (ASIC), logic circuits, and any other circuit or processor capable of executing the functions/methods described herein. Regardless of the type of processor, it is configured to execute one or more of the methods described herein. The controller may be integrated into the IVD device, may be integrated into a unit, a sub-unit or a module of an IVD device, or may be a separate logic entity in communication with the IVD device or its units, sub-units or modules via a direct connection, wired or wirelessly, or indirectly over a communications network, wired or wirelessly, such as a wide area network, e.g. the Internet or a Health Care Provider's local area network or intranet, via a network interface device. In some aspects, the controller might be integral with a data management unit, e.g. implemented on a computing device such as a desktop computer, a laptop, a smartphone, a tablet, personal digital assistant (PDA), etc., or it may be comprised by a server computer and/or be distributed/shared across/between a plurality of IVD devices.

According to the present disclosure, the controller is configured to control the IVD device to perform a plurality of steps, including:
(a) moving the pipetting probe from an initial position towards an end position and relative to the closed liquid container so that the pipetting probe pierces through the lid of the closed liquid container, while the venting valve is switched to the closed position; (b) monitoring the pressure by the pressure sensor during movement of the pipetting probe; and (c) stopping movement of the pipetting probe upon detecting a pressure difference above a predetermined pressure threshold and switching the venting valve to the open position to equilibrate the pressure difference, and/or (d) continuing moving the pipetting probe towards the end position while the venting valve is switched to the closed position, and aspirating at least a portion of the liquid when the pipetting probe has reached the end position.

As mentioned further above, the pipetting probe may be configured to move in a translational vertical movement, i.e. in a Cartesian z-direction, to lower the pipetting probe into a liquid container, e.g. a sample container, a reagent container, or into a wash station, etc. The terms "initial position" and "end position", as referred to in this disclosure and in the context of pipetting probe movement, define the end points of a predefined and intended movement path of the pipetting probe, in particular of the tip of the pipetting probe. The movement path may be linear, curved, or have a more complex form. For example, the movement path may be a linear vertical movement in a Cartesian z-direction. The initial position of the pipetting probe may therefore be the starting point of a vertical movement and may ideally be determined such that the pipetting probe is above the closed liquid container. Moving the pipetting probe from an initial position "towards" an end position thereby refers to starting the movement of the pipetting probe along the predefined movement path, however, the movement may be stopped and/or aborted before reaching the intended end position, e.g. in case of measuring a pressure difference above a predetermined pressure threshold (s. step (c)).

While the initial position may be a fixed position of the pipetting probe, the end position may depend on external circumstances, e.g. the fill level of the liquid container. The end position may be determined at a position where the tip of the pipetting probe is immersed into the liquid inside the closed liquid container in order to enable the pipetting probe to aspirate at least a part of the liquid. For example and according to an aspect of the disclosure, the end position is defined at a position where the tip of the probe is positioned just below the surface of the liquid in the liquid container after the probe has detected the transition from a gaseous to a liquid environment. According to an alternative aspect of the disclosure, the end position may be at a predetermined and fixed z-coordinate. Consequently, when moving the pipetting probe relative to the closed liquid container from an initial position (above the closed liquid container) towards an end position (inside the liquid container), the pipetting probe will pierce through the lid of the closed liquid container.

According to the present disclosure, the pressure sensor monitors the pressure at the tip of the pipetting probe during its movement, in particular during its vertical movement into the liquid container. "Monitoring the pressure" in the sense of the present disclosure may refer to continuously collecting data regarding the pressure at the tip of the pipetting probe over a certain time period. Alternatively, "monitoring" may refer to the collection of discrete data points related to the pressure, i.e. at certain predefined time points within the monitoring time period. For example, a pressure measurement may be conducted every 0.2 seconds, every 0.1 seconds, every 10 milliseconds, every millisecond, every 0.5 milliseconds, or every 0.1 milliseconds over a time period of ≤ 5 seconds, or in particular ≤ 3 seconds, or ≤ 2 seconds, or ≤ 1 second. As the skilled person will appreciate, monitoring the pressure during movement of the pipetting probe does not imply that the pressure is measured only during the probe's movement. On the contrary, pressure can also be measured and monitored before or after the movement, i.e. when the pipetting probe is in a static position. The feature of monitoring the pressure according to the present disclosure indicates that the monitoring operation takes place at least for the duration of the probe movement.

According to the present disclosure, the movement of the pipetting probe may be stopped before reaching the end position, namely in the event of detecting a pressure difference above a predetermined pressure threshold. The term "pressure threshold" as used in this disclosure refers to a predetermined pressure value or level, reflected by an absolute number, by which the pressure inside the liquid container may differ from the surrounding pressure. As long as the pressure difference (absolute number) remains below the pressure threshold, the pressure difference between the interior of the liquid container and its exterior does not affect the precision, accuracy and reliability of the pipetting operation. However, if the pressure difference reaches or surpasses the predetermined pressure threshold, the risk of imprecise and unreliable pipetting, and consequently of cross-contamination and unreliable analytical results, is increased. The pressure difference is an absolute number and may therefore comprise positive or negative differences, i.e. the pressure inside the liquid container may either be below or above the surrounding pressure. The pressure threshold may be determined by the manufacturer of the IVD device or by a field service representative or in some cases by the operator of the IVD device. According to an aspect of the present disclosure, the predetermined pressure threshold is about 100 mBar. Therefore, if the pressure sensor measures a pressure inside the liquid container that differs from the surrounding pressure, e.g. atmospheric pressure, by more than +100 mBar or more than -100 mBar, the pressure difference is considered "above the predetermined pressure threshold". For example, given that the atmospheric pressure is 1013,25 mBar, the pressure difference is above the pressure threshold if the measured pressure inside the liquid container is below 913,25 mBar or above 1113,25 mBar. In contrast, if the pressure sensor measures a pressure inside the liquid container that differs by less than +100 mBar or less than -100 mBar from the surrounding pressure, the pressure difference is considered "below the predetermined pressure threshold". According to other aspects, the pressure threshold may be determined at any level in a range between 1 mBar and 500 mBar, e.g. between 50 mBar and 200 mBar, or between 80 mBar and 120 mBar. The predefined pressure threshold may further be determined based on the designated pipetting volume and/or the pipetting precision. For example, smaller volumes and more precise pipetting operations are more susceptible to pressure differences, so that in such cases the pressure threshold may be determined at a lower value. According to an aspect of the present disclosure, the pressure difference refers to a pressure inside the closed container that is higher than the surrounding pressure, i.e. an overpressure. Should the pressure inside the liquid container be above the predetermined pressure threshold, the pipetting probe is prevented from aspirating liquid from the liquid container. The pipetting probe's movement is stopped immediately and the venting valve is switched to an open position in order to vent the liquid container, e.g. via the venting conduit. According to the present disclosure, the movement of the pipetting probe is continued as long as the measured pressure inside the liquid container keeps below the predetermined pressure threshold and is stopped at the latest when arriving at the end position, where the pipetting probe then aspirates at least a portion of liquid from the liquid container. "Immediately" as referred to in the present disclosure with respect to the stopping of the probe movement, relates to a time period that is as short as technically possible in order to avoid that the pipetting probe moves into the liquid inside the liquid container. According to an aspect, the probe movement is stopped in ≤ 10 millisecond after detection of an above-threshold pressure event. According to yet another aspect, the probe movement is stopped in ≤ 20 millisecond after detection of an above-threshold pressure event.

According to an aspect of the present disclosure, step (c) of stopping movement of the pipetting probe upon detecting a pressure difference above a predetermined pressure threshold and switching the venting valve to the open position further comprises performing a probe environment discrimination test, where switching the venting valve to the open position is only performed upon detecting a gaseous probe environment in the probe environment discrimination test. As mentioned above, the pipetting probe may be electrically conductive, e.g. in the form of a capacitive liquid level detector, and configured to discriminate between a gaseous and a liquid probe environment. This allows using the pipetting probe to perform an "environment discrimination test" in order to determine whether the venting valve can be opened or not. In a laboratory environment, it may occur that certain liquid containers are overfilled, i.e. that more liquid has been inserted into the liquid container than designated. This results in a reduced or even non-existent headspace (i.e. volume of gas, in particular air) between the lid of the closed liquid container and the liquid surface. In this case, at the time point of stopping the pipetting probe's movement in response to an above-threshold-pressure-event, the pipetting probe may have already immersed into the liquid in the liquid container. Opening the venting valve in this situation would likely result in the liquid being pushed into the pipetting probe and possibly into the probe conduit, the venting conduit and the venting valve. Since the liquid in the liquid container may be a blood specimen, this could lead to a severe contamination of device parts and ultimately to cross-contamination of other samples and misinterpreted analytical results. It is therefore important that a check in form of a probe environment discrimination test is performed in order to determine whether the pipetting probe, and in particular the tip of the pipetting probe, is in the gaseous phase or already in the liquid phase once overpressure has been detected and the movement of the pipetting probe has been stopped. The venting valve is only switched to the open position if a gaseous probe environment has been detected in the probe environment discrimination test, preventing any possible contamination effects and thereby ensuring reliable operation of the pipetting unit and the IVD device.

According to another aspect of the present disclosure, step (c), which includes stopping the movement of the pipetting probe upon detecting a pressure difference above a predetermined pressure threshold, further comprises switching the venting valve to the open position only if the pressure inside the liquid container is higher than the surrounding pressure and has surpassed the predetermined pressure threshold. Conversely, if the pressure inside the liquid container is lower than the surrounding pressure by at least the amount determined by the pressure threshold, the controller is configured to prevent the pipetting probe from aspirating the liquid, and also from equilibrating the pressure difference. With other words, step (c) includes differentiating between overpressure and underpressure inside the liquid container compared to its surroundings.

According to another aspect of the present disclosure, step (c) of stopping movement of the pipetting probe upon detecting a pressure difference above a predetermined pressure threshold, further comprises switching the venting valve to the open position for a predetermined time period or until the pressure difference falls below the predetermined pressure threshold. With regard to the first alternative, the predetermined time period is defined as the maximum duration during which the venting valve is opened, and may be long enough to enable adequate pressure equilibration, but also as short as possible to minimize the impact on extending the throughput and turn-around-time. For example, the predetermined time period may be between 0.01 and 1 second, e.g. between 0.01 and 0.5 seconds, or between 0.05 and 0.4 seconds. With regard to the second alternative, the pressure sensor continues monitoring the pressure at the tip of the pipetting probe while the venting valve is in the open position until a pressure inside the closed liquid container is measured that is below the pressure threshold. Once the predetermined time period has ended or the pressure difference has dropped below the pressure threshold, the venting valve may be switched to the closed position.

According to another aspect of the present disclosure, the IVD device comprises a wash station. A "wash station" as referred to in the present disclosure may refer to a dedicated position or unit within the IVD device that is configured for washing or cleaning the pipetting probe. For this purpose, the wash station may be fluidically connected to a buffer or reservoir of cleaning solution or system fluid from where cleaning solution or system fluid can be provided to the wash station. The wash station may further be equipped with other mechanisms that support efficient cleaning of the pipetting probe, e.g. by emitting light in the ultraviolet (UV) range, ultrasonic waves, etc.

The IVD device according to any of the aspects mentioned above may therefore further comprise a cleaning solution reservoir. The term "cleaning solution reservoir" refers to any kind of reservoir or storage that contains a cleaning solution. A cleaning solution in the sense of the present disclosure may be any kind of solution that enables the efficient and ideally complete removal of residue on the pipetting probe and may e.g. comprise a detergent, and/or chemical substances that support the cleaning procedure, such as hydrogen chloride, sodium chloride, sodium hypochlorite, sodium hydroxide, etc. The pipetting unit according to aspects of the present disclosure comprises a cleaning conduit fluidically connecting the cleaning solution reservoir to the probe conduit, where the cleaning conduit comprises a cleaner valve. This allows for moving cleaning solution, e.g. by a pump, from the cleaning solution reservoir via the cleaning conduit into the probe conduit. The cleaner valve may be switched to an open position to allow the flow of cleaning solution through the cleaning conduit into the probe conduit. From there, the cleaning solution can be moved into the pipetting probe. This enables cleaning the interior of the pipetting probe.

Efficient cleaning of the pipetting probe in an IVD device is important to avoid carry-over and cross-contamination. It is therefore common to wash a multi-use pipetting probe after it has come in contact with a liquid, e.g. after aspirating and dispensing a reagent or a blood sample. With respect to the present disclosure, a pipetting probe washing step may thus be conducted after the liquid that was aspirated from the closed liquid container in step (d) has been dispensed into a designated vessel, e.g. a reaction vessel, or has been discarded at the waste position. However, the risk of carry-over and cross-contamination is already increased alone by piercing the pipetting probe through the lid of the closed container and without coming in contact with the liquid inside the closed container (e.g. step (c)). In such a scenario, the pipetting probe may be contaminated by coming in contact with droplets that were formed on the inside of the lid, e.g. during transportation of the liquid container. Therefore, and according to an aspect of the present disclosure, the controller is configured to control the IVD device to perform step (e) of switching the venting valve to the closed position, removing the pipetting probe from the liquid container and washing the pipetting probe in the wash station. The washing procedure may include washing the pipetting probe's exterior in the wash station by bringing the exterior surface in contact with cleaning solution, e.g. by filling the wash station with cleaning solution and immersing the pipetting probe into the cleaning solution, or by spraying or rinsing the surface with cleaning solution. Additionally or alternatively, the pipetting probe's interior can be washed by moving cleaning solution from the cleaning solution reservoir through the cleaning conduit and the probe conduit into the pipetting probe (as also described further above), thereby rinsing the interior surface of the pipetting probe with cleaning solution. According to an aspect of the present disclosure, step (e) is performed after step (c) and/or after step (d).

According to a further aspect of the present disclosure, the probe conduit comprises a probe valve installed between the pipetting probe and the venting conduit. The controller is configured to control the IVD device to switch the probe valve to a closed position, and to switch the cleaner valve to an open position, and to provide cleaning solution from the cleaning solution reservoir through the cleaning conduit and the probe conduit into the venting conduit. This allows for cleaning the venting conduit, typically after the ventilation step (c) has been performed, and ensures that the risk of contamination of the venting conduit is minimized.

According to certain aspects of the present disclosure, the controller is configured to control the IVD device to perform step (c1) upon performing step (c) and step (e). Step (c1) comprises performing steps (a), (b), (c) and/or (d). As outlined above, step (c) involves stopping movement of the pipetting probe upon detecting a pressure value above a predetermined pressure threshold and switching the venting valve to the open position to allow the ventilation of the closed liquid container, e.g. via the venting conduit. As also outlined above, step (e) then involves closing the venting valve, removing the pipetting probe from the liquid container and washing the pipetting probe in the wash station, in order to prevent any possible carry-over or cross-contamination. After the ventilation step (c) the pressure inside the liquid container has likely equilibrated to the pressure level of its surrounding. The controller therefore controls the IVD device to repeat steps (a), (b) and (c), i.e. moving the pipetting probe so that it pierces through the lid of the closed liquid container, while the venting valve is in the closed position, and monitoring the pressure by the pressure sensor during the movement of the pipetting probe, and only stopping the movement of the pipetting probe a second time in the event of again detecting a pressure difference above the predetermined pressure threshold, followed by an opening of the venting valve to equilibrate the pressure difference. Additionally or alternatively, the controller controls the IVD device to perform step (d), i.e. to stop the pipetting probe's movement when reaching the end position, which is a position where the tip of the pipetting probe is immersed into the liquid inside the closed liquid container, and aspirating at least a portion of the liquid.

According to an alternative aspect of the present disclosure, step (c) further includes determining a z-value representing a surface level of the liquid in the closed liquid container upon detecting the liquid probe environment in the probe environment discrimination test, removing the pipetting probe from the closed liquid container, and washing the pipetting probe in a wash station. Step (c) further includes moving the pipetting probe into the liquid container to a position between the lid of the closed liquid container and the determined z-value representing the surface of the liquid, before switching the venting valve to the open position to equilibrate the pressure difference, e.g. via the venting conduit. The pipetting probe is electrically conductive, allowing to use the pipetting probe not only to aspirate and/or dispense liquids, but also to detect when it makes contact with a liquid, i.e. to detect a liquid level or liquid surface. Since the pipetting probe may be configured to move in a translational vertical movement, i.e. in a Cartesian z-direction, the height of the pipetting probe at the time point of contacting the liquid level can be determined and recorded. This height is assigned a z-value which is representative of the surface level of the liquid. In the example described further above, in which the pipetting probe may have already immersed into the liquid at the time point of stopping the pipetting probe's movement, the surface level may have either already been determined in the downward movement of the pipetting probe or alternatively, when removing it out of the liquid. The controller may be configured to calculate a position located between the determined z-value and the lid of the liquid container, where the position of the lid of the liquid container can be determined by e.g. a pressure sensor, an actuator for actuating the pipetting probe to move through the lid, or based on data input regarding the liquid container type, etc. This allows the pipetting probe to be reliably moved into the possibly reduced headspace, where equilibration of the pressure difference can occur.

According to certain aspects of the present disclosure, the IVD device further comprises a waste position, where the venting conduit is fluidically connected to the waste position. The term "waste position" as referred to in the present disclosure may refer to any kind of position or unit that allows for discarding of liquid waste. For example, it may be a designated position in the IVD device to which one or more pipetting units can be moved in order to discard any liquid that is present in one or more pipetting probes or it may be fluidically connected, e.g. through a fluidic conduit, to one or more functional units. The waste position may be a container or reservoir that can be manually removed from the IVD device when full. Alternatively, the waste position may be connected to a liquid drainage system in the laboratory.

The present disclosure further relates to an automated method for aspirating a liquid from a closed liquid container. The method comprises controlling an IVD device according to any of the aspects described above to perform a plurality of steps, including: (a) moving the pipetting probe from an initial position towards an end position and relative to the closed liquid container so that the pipetting probe pierces through the lid of the closed liquid container, while the venting valve is switched to the closed position, (b) monitoring pressure by the pressure sensor during movement of the pipetting probe, (c) stopping movement of the pipetting probe upon detecting a pressure difference above a predetermined pressure threshold and switching the venting valve to the open position to equilibrate the pressure difference, and/or (d) continuing moving the pipetting probe towards the end position while the venting valve is switched to the closed position, and aspirating at least a portion of the liquid when the pipetting probe has reached the end position.

According to an aspect of the present disclosure, the method step (c) comprises performing a probe environment discrimination test, and switching the venting valve to the open position is performed only upon detecting a gaseous probe environment in the probe environment discrimination test (s. above for a more detailed description of the probe environment discrimination test).

According to other aspects of the present disclosure, step (c) further comprises switching the venting valve to the open position for a predetermined time period or until the pressure value falls below the predetermined pressure threshold.

According to other aspects of the present disclosure, the automated method comprises step (e) of switching the venting valve to a closed position, removing the pipetting probe from the liquid container and washing the pipetting probe in a wash station.

According to an aspect of the present disclosure, the automated method comprises performing step (f) upon performing steps (c) and (e), where step (f) comprises performing steps (a), (b), (c) and/or (d). As explained above, it can be assumed that the pressure level inside the liquid container has equalized to the surrounding pressure after performing processing step (c) the first time. After washing the pipetting probe in step (e), steps (a), (b) are repeated, i.e. moving the pipetting probe so that it pierces through the lid of the closed liquid container, while the venting valve is in the closed position, and monitoring the pressure by the pressure sensor during movement of the pipetting probe. It is unlikely that another pressure-event is detected, so that step (d) can be performed, in which the pipetting probe's movement is stopped when reaching the end position, which is a position where the tip of the pipetting probe is immersed into the liquid inside the closed liquid container, and at least a portion of the liquid is aspirated. However, if the pressure difference is above the pressure threshold again, step (c) is repeated instead of performing step (d).

According to other aspects of the present disclosure, the automated method comprises switching a probe valve installed between the pipetting probe and a venting conduit to a closed position, switching a cleaner valve to an open position, and providing cleaning solution from a cleaning solution reservoir through a cleaning conduit and a probe conduit into the venting conduit.

According to other aspects of the present disclosure, step (c) further comprises equilibrating the pressure difference via the venting conduit that is fluidically connected to the waste position.

According to an alternative aspect of the automated method, step (c) comprises determining a z-value representing the surface of the liquid in the closed liquid container upon detecting the liquid probe environment in the probe environment discrimination test. Step (c) further includes removing the pipetting probe from the closed liquid container, washing the pipetting probe in the wash station and moving the pipetting probe into the liquid container to a position between the lid of the closed liquid container and the determined z-value before switching the venting valve to the open position to equilibrate the pressure difference.

According to other aspects of the automated method, the predetermined pressure threshold is about 100 mBar.

### BRIEF DESCRIPTION OF THE DRAWINGS

- FIG. 1: shows a partial top view of an in-vitro diagnostic (IVD) device according to the present disclosure;
- FIG. 2: shows schematically a pipetting unit according to the present disclosure;
- FIG. 3: shows schematically a pipetting unit according to aspects of the present disclosure;
- FIG. 4a: shows a flow diagram of the method for pipetting a liquid through a lid of a liquid container;
- FIG. 4b: shows a flow diagram of the method for pipetting a liquid through a lid of a liquid container according to aspects of the present disclosure.

Skilled artisans appreciate that elements in the figures are illustrated schematically for simplicity and clarity and have not necessarily been drawn to scale. For example, the dimensions of some of the elements in the figures may be exaggerated relative to other elements to help improve understanding of the aspects of the present disclosure. Also, parts have been omitted that do not contribute to the teaching of this disclosure.

### DETAILED DESCRIPTION

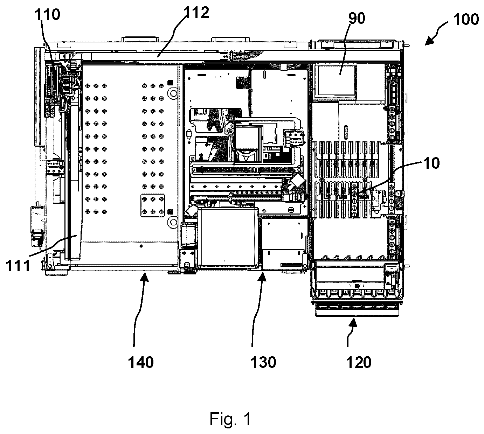

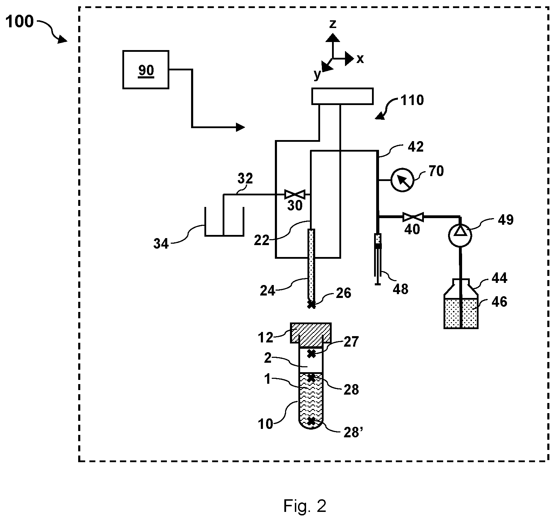

**FIG. 1** shows a partial top view of an in-vitro diagnostic (IVD) device 100 according to the present disclosure comprising a pipetting unit 110 configured to aspirate a liquid from a closed liquid container 10. The pipetting unit 110 comprises a pipetting probe (shown in more detail in **FIG. 2**). In particular, the pipetting unit 110 is mounted translationally on a horizontal arm 111 and the arm 111 is translationally coupled to an orthogonal guide rail 112. The pipetting unit 110 is thus movable horizontally, i.e. in a Cartesian x and/or y direction, in a space above e.g. a sample loading/unloading unit 120, a reaction vessel processing area 130, and a reagent unit 140. The loading/unloading unit 120 comprises functional units that enable loading or unloading of sample containers onto or from the IVD device. The reaction vessel processing area 130 comprises functional units that enable the provision of reaction vessels, in which reagent is brought in contact with sample material and reacts with components in the sample. The reagent unit 140 is configured for holding a plurality of reagents required to perform different diagnostic tests. The reagent unit 140 may be embodied as a closed and tempered storage compartment, comprising access holes for a pipetting probe to enter and withdraw reagent material. The pipetting probe is translationally movable in a vertical direction, i.e. along the z-axis, such as to access a liquid container, e.g. a sample container in the sample loading/unloading unit 120, a reaction vessel in the reaction vessel processing area 130, and/or a reagent container in the reagent unit 140. This allows for using the same pipetting unit 110 for aspirating a portion of a patient's sample from a sample container in the sample loading/unloading unit 120 and dispensing it into a reaction vessel in the reaction vessel processing area 130, and aspirating a portion of a reagent from a reagent container in the reagent unit 140 and dispensing it into the reaction vessel. Alternatively, the pipetting unit 110 may comprise a plurality of pipetting probes, where different pipetting probes may be used for pipetting either samples or reagents, respectively (not shown). Using a plurality of pipetting probes allows for parallelization of pipetting operations, thereby increasing the device's throughput.

With continued reference to **FIG. 1****,** the IVD device 100 further comprises a controller 90 configured to control the IVD device to perform a plurality of processing steps, including operation of the pipetting unit 110 (described with reference to the following figures).

**FIG. 2** shows schematically an IVD device 100 comprising a pipetting unit 110 configured to aspirate a liquid 1 from a closed liquid container 10. The pipetting unit 110 comprises a pipetting probe 24 fluidically connected to a probe conduit 22 and configured to move relative to the closed liquid container 10 and to pierce through a lid 12 of the closed liquid container 10. The pipetting unit 110 further comprises a venting conduit 32 fluidically connected to the probe conduit 22 and comprising a venting valve 30 switchable between an open position and a closed position. The pipetting unit 110 further comprises a pressure sensor 70.

The IVD device 100 illustrated in **FIG. 2** further comprises a system fluid reservoir 44 fluidically connected to the probe conduit 22 via a fluidic conduit 42 for providing a system fluid 46 into the probe conduit 22 and into the pipetting probe 24. The pipetting probe 24 is configured to perform pipetting operations, i.e. aspirating and/or dispensing of liquids. The IVD device 100 may comprise a syringe pump 48 for aspirating and/or dispensing of liquids via the pipetting probe 24, e.g. a sample 1 from a closed sample container 10, or a reagent from a reagent container (not shown), and a pump 49, e.g. a gearwheel pump or a membrane pump, for pumping system fluid 46 from the system fluid reservoir 44 through the fluidic conduit 42 into the probe conduit 22 and pipetting probe 24. Syringe pumps or displacement pumps 48 typically enable more precise dosing than pumps 49 used for moving bulk fluids.

The IVD device 100 further comprises a controller 90, configured to control the IVD device 100 to perform a plurality of processing steps. The processing steps include: (a) moving the pipetting probe 24 relative to the closed liquid container 10 from an initial position 26 towards an end position 28, 28' so that the pipetting probe 24 pierces through the lid 12 of the closed liquid container 10, while the venting valve 30 is switched to the closed. As mentioned further above, the terms "initial position" and "end position" define the end points of a predefined movement path of the pipetting probe, e.g. a vertical movement in a Cartesian z-direction. **FIG. 2** depicts the situation at the beginning of the probe movement, i.e. when the pipetting probe 24 is at the initial position 26 of the vertical movement, where the initial position 26 is determined such that the pipetting probe is above the closed liquid container 10.

The end position 28, 28' is determined at a position where the tip of the pipetting probe 24 is immersed into the liquid 1 inside the closed liquid container 10 in order to enable the pipetting probe 24 to aspirate at least a part of the liquid 1. In the example depicted in **FIG. 2****,** the end position 28 is defined such that the tip of the probe 24 is immersed into the liquid 1 just below the surface. As the skilled person will acknowledge, this definition of the end point depends on the liquid surface level and my vary from liquid container to liquid container. Therefore, a technical solution is required that allows the pipetting probe 24 to detect the liquid surface, i.e. the transition from a gaseous to a liquid environment. According to an aspect of the present disclosure, the pipetting probe 24 is electrically conductive and configured to discriminate between a gaseous and a liquid probe environment. In the example illustrated in **FIG. 2****,** the liquid surface is detected by a capacitive detection method, however other detection methods are also possible, as described further above. According to an alternative aspect of the disclosure, the end position may be at a predetermined and fixed z-coordinate 28', which is independent of the liquid surface. For example, the end position may be defined such that the tip of the pipetting probe is close to the bottom of the liquid container 28'. Typically, this z-coordinate 28' is the same for all liquid containers.

The venting valve 30 is closed during movement of the pipetting probe 24 to avoid that possibly present overpressure inside the liquid container 10 pushes liquid 1 into the venting conduit 32 in an uncontrolled manner. Movement of the pipetting probe 24 may be enabled by conventional actuators known to the skilled person, e.g. a stepper motor, a servo motor, a linear actuator, a pneumatic actuator, a hydraulic actuator, a DC motor with lead screw, a solenoid actuator, a piezoelectric motor, etc.

The processing steps further include (b) monitoring pressure by the pressure sensor 70 during the movement of the pipetting probe 24. The example illustrated in **FIG. 2** contains a piezoelectric pressure sensor. However, other pressure sensing technologies may also be applicable, as outlined further above. Monitoring the pressure may refer to a continuous measuring of pressure at least during the movement of the pipetting probe 24, or it may refer to several individual measurements conducted at certain time intervals during the probe 24 movement. Ultimately, it is important that the pressure sensor 70 detects when the pressure difference reaches a level above a predetermined threshold.

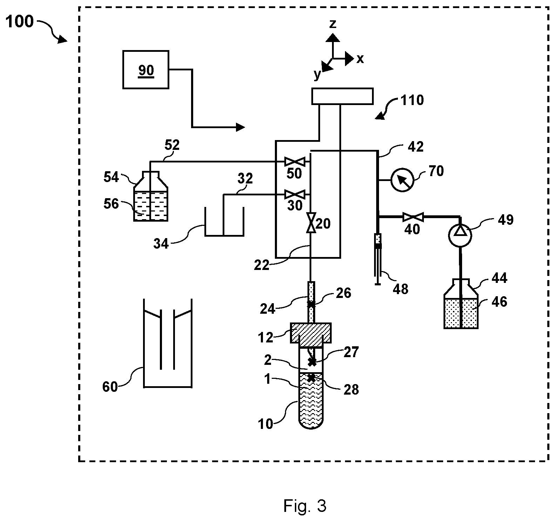

The processing steps further include (c) stopping movement of the pipetting probe 24 upon detecting a pressure difference above a predetermined pressure threshold and switching the venting valve 30 to the open position to equilibrate the pressure difference, e.g. via the venting conduit 32. As can be seen in the example in **FIG. 3****,** when entering the headspace 2 in the liquid container after piercing through the lid 12, the pressure sensor 70 may detect a pressure at the tip of the pipetting probe 24 that exceeds a predetermined pressure threshold. In such a case, the controller 90 sends instructions to stop the movement of the pipetting probe 24 immediately. In the example and according to an aspect of the present disclosure, the pressure threshold is about 100 mBar. At the time point of stopping the movement, the tip of the pipetting probe 24 may e.g. be located at a position 27 in the headspace 2 of the liquid container 10, which is between the initial position 26 and the intended end position 28. The venting valve 30 is then switched to an open position for equilibrating the pressure difference between the liquid container and its surrounding. According to an aspect of the present disclosure, step (c) comprises performing a probe environment discrimination test, and only switching the venting valve 30 to the open position upon detecting a gaseous probe environment in the probe environment discrimination test. This test may be performed to ensure that the pipetting probe has not yet immersed into the liquid at the time point of detecting the pressure above a predetermined threshold. Opening the venting valve with the pipetting probe already immersed into the liquid would likely result in the liquid being pushed into the pipetting probe and possibly into the probe conduit, the venting conduit and the venting valve. Since the liquid in the liquid container may be a blood specimen, this could lead to a severe contamination of device parts and ultimately to cross-contamination of other samples and misinterpreted analytical results. This can be avoided by performing the probe environment discrimination test prior to opening the venting valve 30. With reference to **FIG. 3****,** the probe environment discrimination test is performed after the probe 24 movement was stopped due to an above-threshold-pressure event. The tip of the pipetting probe 24 is positioned 27 in the headspace 2 of the liquid container 10. Opening the venting valve 30 can therefore be considered safe and is performed accordingly in order to equilibrate the pressure inside the liquid container 10 to its surrounding. According to yet another aspect of the present disclosure, step (c) comprises switching the venting valve 30 to the open position for a predetermined time period or until the pressure value falls below the predetermined pressure threshold.

Alternatively or additionally to step (c), the processing steps include (d) continuing moving the pipetting probe 24 towards the end position 28, 28' while the venting valve 30 is switched to the closed position, and aspirating at least a portion of the liquid 1 when the pipetting probe 24 has reached the end position 28, 28'. Step (d) is performed alternatively to step (c) if the monitored pressure remains below the predetermined pressure threshold during the entire movement of the pipetting probe 24. In this case, it can be assumed that the pressure inside the liquid container is in a range that is manageable by the IVD device without jeopardizing the pipetting accuracy and ultimately the reliability of analytical results. Step (d) may be performed additionally to step (c) after the equilibration has taken place. According to an aspect of the present disclosure, a wash step (e) may be performed between step (c) and step (d).

With reference to both **FIG. 2** and **FIG. 3****,** the IVD device 100 according to aspects of the present disclosure comprises a waste position 34. The venting conduit 32 is fluidically connected to the waste position 34 so that liquid waste that is present in the venting conduit 32, e.g. system fluid 46 or cleaning solution 56, can directly be discarded.

The IVD device 100 as schematically illustrated in **FIG. 3** comprises a wash station 60 according to an aspect of the present disclosure. The wash station 60 may be shaped in the form of a cup or vessel into which the pipetting probe 24 can be lowered for washing. The wash station 60 may be filled with cleaning solution allowing for the washing of the exterior surface of the pipetting probe 24. Therefore, the wash station 60 may be fluidically connected to a buffer or reservoir of cleaning solution (fluidic connection not shown). The wash station may comprise other teachings that support efficient cleaning of the pipetting probe, e.g. by emitting UV-light, ultrasonic waves, etc. It is common knowledge, that multi-use pipetting probes are washed after coming in contact with liquids, such as blood samples or reagents. According to an aspect of the present disclosure, a washing operation is also conducted after step (c) in order to reduce the risk of cross-contamination and carry-over, even though it is likely that the pipetting probe 24 has not come in contact with the liquid 1 in the liquid container 10 in step (c). The pipetting probe 24 may still be contaminated by coming in contact with droplets that were formed on the inside of the lid 12. Therefore, the controller 90 is configured to control the IVD device 100 to perform step (e) after performing step (c). Step (e) includes closing the venting valve 30, removing the pipetting probe 24 from the liquid container 10 and washing the pipetting probe 24 in the wash station 60.

Additionally and according to an aspect of the present disclosure, the pipetting unit 110 comprises a cleaning conduit 52 fluidically connecting the probe conduit 22 to a cleaning solution reservoir 54. A cleaner valve 50 allows to regulate liquid exchange between the probe conduit 22 and the cleaning conduit 52. Opening the cleaner valve 50, while the probe valve 20 and the venting valve 30 are closed, allows the syringe pump 48 to draw cleaning solution 56 through the cleaning conduit 52 into the probe conduit 22. In a following step, the cleaner valve 50 is closed and the probe valve 20 is opened. Then, the syringe pump 48 is used to pump the drawn volume of cleaning solution 56 through the probe conduit 22 and pipetting probe 24 into the wash station 60. This enables cleaning of the interior surface of the pipetting probe 24.

With continued reference to **FIG. 3** and according to an aspect of the present disclosure, the probe conduit 22 comprises the probe valve 20, which is installed between the pipetting probe 24 and the venting conduit 32. The controller 90 is configured to control the IVD device 100 to close the probe valve 20, and at the same time to open the cleaner valve 50, which allows to provide cleaning solution 56 from the cleaning solution reservoir 54 through the cleaning conduit 52 and the probe conduit 22 into the venting conduit 32. Again, the syringe pump 48 may be used to draw cleaning solution 56 from the cleaning solution reservoir 54 and to pump it into the venting conduit 32. This allows for cleaning of the venting conduit 32 after the equilibration step (c1) has been performed. Cleaning the venting conduit 32 reduces the risk of contamination.

With continued reference to **FIG. 3****,** the IVD device 100 may further comprise a system fluid valve 40, which can be closed to prevent back flow of system fluid 46 into the system fluid reservoir 44. The system fluid valve 40 is installed along the fluidic conduit 42 fluidically connecting the probe conduit 22 with the system fluid reservoir 44. To provide system fluid 46 from the system fluid reservoir 44 into the probe conduit 22 and pipetting probe 24, the system fluid valve 40 is opened so that system fluid 46 can be pumped by the pump 49 through the fluidic conduit 42 into the probe conduit 22 and the pipetting probe 24. The pump 49 may also be used to establish a constant pressure inside the fluidic system, e.g. a pressure of about 2.55 bar during the wash procedure of the pipetting probes.

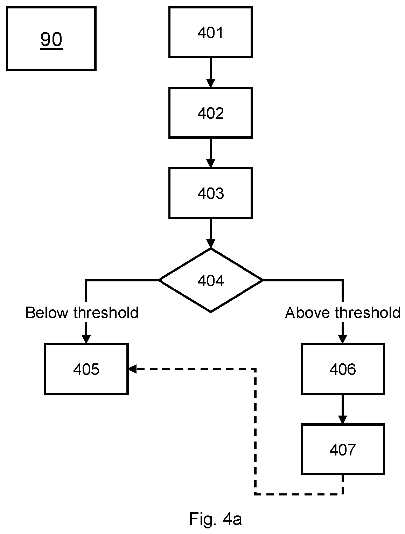

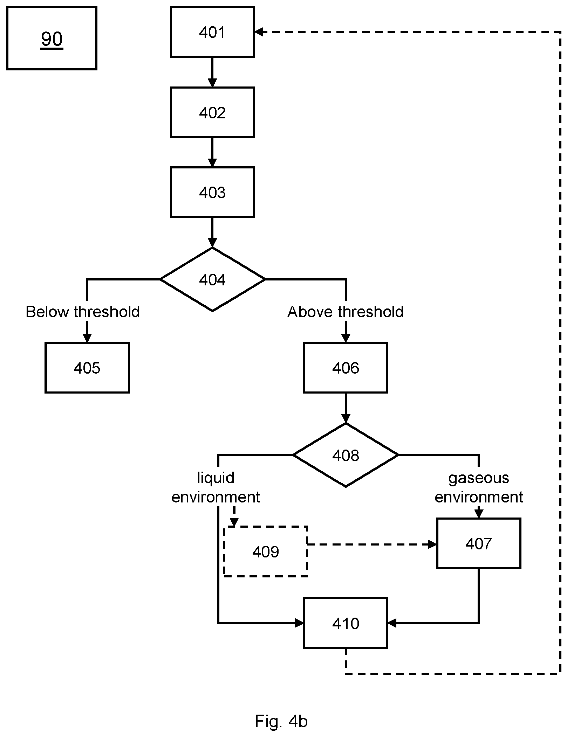

**FIG. 4a** shows a flow diagram of an automated method for aspirating a liquid 1 from a closed liquid container 10 according to the present disclosure. **FIG. 4b** shows a flow diagram of an automated method for aspirating a liquid 1 from a closed liquid container 10 according to aspects of the present disclosure. The automated method comprises controlling an IVD device 100 according to any of the aspects described above to perform a plurality of processing steps. To control the IVD device 100 accordingly, the IVD device 100 comprises a controller 90.

With reference to both **FIGS. 4a** and **4b****,** the processing steps of the automated method include step 401 of switching the venting valve 30 to a closed position. In order to switch the venting valve between an open and a closed position, it may be electrically activated, e.g. by applying a voltage.

In a next step **402,** movement of the pipetting probe 24 is initiated, directed along a predetermined movement path. The movement path thereby refers to the route that the pipetting probe 24 follows and is determined by its end points, i.e. an initial position 26 and an end position 28, 28'. In the present example, the movement is along a linear, vertical path in a Cartesian z-direction. "Initiating" refers to starting the movement of the pipetting probe 24 at the initial position 26 and directed towards the end position 28, 28'. However, the initiation of the movement does not necessarily imply that the end position 28, 28' will be reached, the end position 28, 28' merely serves as an indication of the direction and intended end point of the movement. It may occur under certain circumstances, as will be outlined further below, that the movement may be halted before reaching the intended end position 28, 28'. Under most circumstances however, the pipetting probe 24 will reach the designated end position 28, 28'. During the movement, the pipetting probe 24 moves relative to the closed liquid container 10, so that the pipetting probe 24 pierces through the lid 12 of the closed liquid container 10.

The automated method further includes step **403** of controlling the pressure sensor 70 to monitor pressure during the movement of the pipetting probe 24. As already mentioned earlier, monitoring the pressure may refer to a continuous measuring of pressure at least during the movement of the pipetting probe 24, or it may refer to several individual measurements conducted at certain time intervals during the probe 24 movement. Also, it is important to note that the pressure monitoring may occur before the movement of the pipetting probe 24 starts or after its movement has ended. Step **403** may therefore be initiated chronologically before step **402,** as long as the pressure monitoring occurs at least during the movement of the pipetting probe 24.

With continued reference to both **FIGS. 4a** and **4b****,** step **404** refers to a continuous check being performed on the pressure data collected during pressure monitoring. The check involves determining whether the difference of the measured pressure relative to the surrounding pressure, e.g. atmospheric pressure, is above a certain predetermined pressure threshold. For example and according to an aspect, the predetermined pressure threshold may be determined at about 100 mBar pressure difference. As long as the measured pressure at the tip of the pipetting probe 24 has a difference of less than 100 mBar versus the surrounding atmospheric pressure, the precision, accuracy and reliability of the pipetting operation is considered acceptable in order to ensure reliable analytical results.

With reference to step **405,** the pressure difference remains below the predetermined pressure threshold during the entire movement of the pipetting probe 24. In this case, the movement of the pipetting probe 24 is stopped when reaching the end position 28, 28' of the movement path where an aliquot of the liquid 1 in the liquid container 10 is aspirated. The aliquot may further be used to perform analytical measurements in order to obtain analytical results (steps not shown in the flow diagrams of **FIGS. 4a** or **4b**). For example, if the aliquot is a blood sample, it may be mixed with one or more reagents and be analyzed in a measuring unit of the IVD device.

Alternatively to step **405,** and in case the continuous check on the pressure data during pressure monitoring reveals that at a certain time point the measured pressure exceeds a predetermined pressure threshold, the exemplary method in **FIG. 4a** includes step **406** of stopping movement of the pipetting probe 24 and step **407** of switching the venting valve 30 to an open position. Stopping the movement is performed immediately after detection of an above-threshold pressure event. Therefore, the pressure sensor according to the present disclosure has a high dynamic, i.e. a reaction time ≤ 1 millisecond, and the signal processing unit of the pressure sensor has a short response time, e.g. ≤ 1 millisecond, in order to prevent the pipetting probe 24 from entering into the liquid 1 inside the liquid container 10. Once the venting valve 30 is opened, the pressure inside the liquid container 10 can equilibrate with its surrounding via the venting conduit 32. According to an aspect of the present disclosure, system fluid that is present inside the probe conduit 22 and/or in the venting conduit 32 is pushed out of the venting conduit 32 due to the releasing overpressure and into a waste position 34, with which the venting conduit 32 is fluidically connected. According to another aspect of the present disclosure, the venting valve 30 is switched to the open position for a predetermined time period or until the pressure value falls below the predetermined pressure threshold. Once the pressure inside the liquid container 10 is equilibrated, the automated method may include performing step **405,** i.e. continuing the movement of the pipetting probe 24 towards the dedicated end position 28, 28', and aspirating a portion of the liquid 1 when the pipetting probe 24 has reached the end position 28, 28'. According to another aspect of the present disclosure, step 406 includes differentiating between overpressure and underpressure inside the liquid container 10, and switching the venting valve 30 to the open position only if the pressure inside the liquid container 10 is higher than the surrounding pressure and has surpassed the predetermined pressure threshold. Conversely, if the pressure inside the liquid container 10 is lower than the surrounding pressure by at least the amount determined by the pressure threshold, the controller 90 is configured to prevent the pipetting probe 24 from aspirating the liquid 1, and also from equilibrating the pressure difference.

**FIG. 4b** illustrates an exemplary method according to aspects of the present disclosure. Steps **401** to **405** are analogous to the steps in **FIG. 4a** and are therefore not further discussed here. After detecting a pressure difference above the predetermined threshold in step **404** and in consequence immediately stopping the movement of the pipetting probe 24 in step **406,** a probe environment discrimination test is performed (step **408**). As mentioned further above, the probe environment discrimination test is performed to determine whether the tip of the pipetting probe 24 is in the headspace 2 or in the liquid 1 at the time point of stopping the probe 24 movement. The pipetting probe 24 therefore requires to be electrically conductive. For example, a capacitive detection method may be used to discriminate between a gaseous and a liquid probe 24 environment. In case the probe environment discrimination test (step **408**) reveals that the tip of the pipetting probe 24 is in the liquid 1, the equilibration is aborted, i.e. the venting conduit 30 is not opened. Instead, the pipetting probe 24 is retracted from the liquid container 10. According to an aspect of the present disclosure, the pipetting probe 24 may be washed in the wash station 60 (step **410**). Alternatively, only if the probe environment discrimination test (step **408**) reveals that the tip of the pipetting probe has come to a stop in the headspace 2 between the liquid surface and the lid 12 of the liquid container 10, the venting valve 30 is switched to an open position (step **407**), so that pressure equilibration can take place. According to a further aspect of the present disclosure, the automated method may comprise switching the venting valve 30 to the open position for a predetermined time period or until the pressure value falls below the predetermined pressure threshold.

After the equilibration step **407** has been completed (or alternatively if the equilibration was aborted, as explained above), the automated method according to an aspect further comprises a probe washing step **410,** in which the venting valve 30 is switched to a closed position, the pipetting probe 24 is removed from the liquid container 10 and washed in the wash station 60 in order to prevent any possible carry-over or cross-contamination. According to another aspect, the washing step **410** may further include closing the probe valve 20 installed between the pipetting probe 24 and the venting conduit 32, opening the cleaner valve 50, and providing cleaning solution 56 from the cleaning solution reservoir 54 into the venting conduit 32 in order to clean the venting conduit 32. Cleaning of the pipetting probe 24 and cleaning of the venting conduit 32 may be performed sequentially.

According to yet another aspect of the present disclosure and as illustrated in the flow diagram of **FIG. 4b****,** the automated method includes repeating the procedure, starting from step **401.** After the washing step **410** of the pipetting probe 24, and possibly of the venting conduit 32, the controller 90 controls the IVD device 100 to ensure that the venting valve 30 is closed (step **401**), to initiate movement of the pipetting probe 24 from the initial position 26 towards the end position 28, 28' (step **402**), and to monitor pressure during the movement of the pipetting probe 24 (step **403**). In case the pressure difference in the liquid container 10 was already equilibrated in previously performed step **407,** the pressure difference continuously checked during probe 24 movement (step **404**) will likely remain below the predetermined pressure threshold. Consequently, step **405** can be performed, which includes moving the pipetting probe 24 until it reaches the designated end position 28, 28' and controlling the pipetting probe 24 to aspirate an aliquot of the liquid 1 in the liquid container 10.

Alternatively, in case the pressure difference in the liquid container 10 was not equilibrated because the probe environment discrimination test (step **408**) revealed that the tip of the pipetting probe 24 came to a stop inside the liquid 1, the repetition of the pressure check (step **404**) may result in an above threshold event. This would consequently result in additionally repeating steps **406, 408,** and **410,** and possibly step **407** if the pipetting probe 24 stops in the headspace 2.

According to an alternative aspect of the present disclosure, in case the probe environment discrimination test (step **408**) reveals that the tip of the pipetting probe 24 came to a stop inside the liquid 1, the automated method includes step **409** of determining a z-value representing a surface level of the liquid 10 in the closed liquid container 10. Step **409** further includes removing the pipetting probe 24 from the closed liquid container, washing the pipetting probe 24 in the wash station 60, moving the pipetting probe 24 into the liquid container 10 to a position between the lid 12 of the closed liquid container 10 and the determined z-value representing the surface of the liquid 1, before switching the venting valve to the open position (step **407**) to equilibrate the pressure difference, e.g. via the venting conduit.

In the preceding specification, devices and methods according to various aspects are described in detail. The devices and methods may be embodied in many different forms and should not be construed as limited to the aspects set forth and illustrated herein. It is therefore to be understood that the devices and methods are not to be limited to the specific aspects disclosed and that modifications and other aspects are intended to be included within the scope of the appended claims. Although specific terms are employed herein, they are used in a generic and descriptive sense only and not for purposes of limitation. Unless defined otherwise, all technical and scientific terms used herein have the same meaning as commonly understood by the person skilled in the art to which the disclosure pertains. Although any methods and materials similar to or equivalent to those described herein can be used in the practice or testing of the methods, the preferred methods and materials are described herein.

Moreover, reference to an element by the indefinite article "a" or "an" does not exclude the possibility that more than one element is present, unless the context clearly requires that there be one and only one element. The indefinite article "a" or "an" thus usually means "at least one." Likewise, the terms "have," "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. For example, the expressions "A has B," "A comprises B" and "A includes B" may refer both to a situation in which, besides B, no other element is present in A (i.e. a situation in which A solely and exclusively consists of B) or to a situation in which, besides B, one or more further elements are present in A, such as element C, elements C and D, or even further elements.

Also, reference throughout the specification to "one aspect", "an aspect", "one example" or "an example", means that a particular feature, structure or characteristic described in connection with the aspect or example is included in at least one aspect. Thus, appearances of the phrases "in one aspect", "in an aspect", "one example" or "an example", in various places throughout this specification are not necessarily all referring to the same aspect or example.

Furthermore, the particular features, structures, or characteristics may be combined in any suitable combinations and / or sub-combinations in one or more embodiments or examples.

## Claims

1. An in-vitro diagnostic, IVD, device (100) comprising:
- a pipetting unit (110) configured to aspirate a liquid (1) from a closed liquid container (10), wherein the pipetting unit (110) comprises:
- a pipetting probe (24) fluidically connected to a probe conduit (22) and configured to move relative to the closed liquid container (10) and to pierce through a lid (12) of the closed liquid container (10);
- a venting conduit (32) fluidically connected to the probe conduit (22) and comprising a venting valve (30) switchable between an open position and a closed position;
- a pressure sensor (70) configured to measure pressure at a tip of the pipetting probe (24);
- the IVD device (100) further comprising a system fluid reservoir (44) fluidically connected to the probe conduit (22) via a fluidic conduit (42) for providing a system fluid (46) into the probe conduit (22) and into the pipetting probe (24);
- a controller (90) configured to control the IVD device (100) to perform a plurality of processing steps, including:
(a) moving the pipetting probe (24) from an initial position (26) towards an end position (28, 28') and relative to the closed liquid container (10) so that the pipetting probe (24) pierces through the lid (12) of the closed liquid container (10), while the venting valve (30) is switched to the closed position;
(b) monitoring pressure by the pressure sensor (70) during movement of the pipetting probe (24); and
(c) stopping movement of the pipetting probe (24) upon detecting a pressure difference above a predetermined pressure threshold and switching the venting valve (30) to the open position to equilibrate the pressure difference, and/or
(d) continuing moving the pipetting probe (24) towards the end position (28, 28') while the venting valve (30) is switched to the closed position, and aspirating at least a portion of the liquid (1) when the pipetting probe (24) has reached the end position (28, 28').

2. The IVD device (100) according to claim 1, wherein the pipetting probe (24) is electrically conductive and configured to discriminate between a gaseous and a liquid probe environment, and wherein step (c) comprises performing a probe environment discrimination test, and wherein switching the venting valve (30) to the open position is only performed upon detecting a gaseous probe environment in the probe environment discrimination test.

3. The IVD device (100) according to claim 1 or 2, wherein step (c) comprises switching the venting valve (30) to the open position for a predetermined time period or until the pressure difference falls below the predetermined pressure threshold.

4. The IVD device (100) according to any one of claims 1 to 3, further comprising a wash station (60), wherein the controller (90) is configured to control the IVD device (100) to perform step (e) of switching the venting valve (30) to the closed position, removing the pipetting probe (24) from the liquid container (10) and washing the pipetting probe (24) in the wash station (60).

5. The IVD device (100) according to claim 4, wherein the controller (90) is configured to control the IVD device (100) to perform step (f) upon performing step (c) and step (e), wherein step (f) comprises performing steps (a), (b), (c) and/or (d).

6. The IVD device (100) according to any one of claims 1 to 5, comprising a cleaning solution reservoir (54), wherein the pipetting unit (110) comprises a cleaning conduit (52) fluidically connecting the cleaning solution reservoir (54) to the probe conduit (22), and wherein the cleaning conduit (52) comprises a cleaner valve (50).

7. The IVD device (100) according to claim 6, wherein the probe conduit (22) comprises a probe valve (20) installed between the pipetting probe (24) and the venting conduit (32), and wherein the controller (90) is configured to control the IVD device (100) to switch the probe valve (20) to a closed position, and to switch the cleaner valve (50) to an open position, and to provide cleaning solution (56) from the cleaning solution reservoir (54) through the cleaning conduit (52) and the probe conduit (22) into the venting conduit (32).

8. The IVD device (100) according to any one of claims 1 to 7, comprising a waste position (34), wherein the venting conduit (32) is fluidically connected to the waste position (34).

9. The IVD device (100) according to claim 2, wherein step (c) comprises determining a z-value representing a surface of the liquid (1) in the closed liquid container (10) upon detecting the liquid probe environment in the probe environment discrimination test, removing the pipetting probe (24) from the closed liquid container (10), washing the pipetting probe (24) in a wash station (60) and moving the pipetting probe (24) into the liquid container (10) to a position between the lid (12) of the closed liquid container (10) and the determined z-value before switching the venting valve (30) to the open position to equilibrate the pressure difference.

10. The IVD device (100) according to any one of claims 1 to 9, wherein the predetermined pressure threshold is about 100 mBar.

11. An automated method for aspirating a liquid (1) from a closed liquid container (10), the method comprising controlling an IVD device (100) according to any of claims 1 to 10 to perform a plurality of processing steps, including:
(a) moving the pipetting probe (24) from an initial position (26) towards an end position (28, 28') and relative to the closed liquid container (10) so that the pipetting probe (24) pierces through the lid (12) of the closed liquid container (10), while the venting valve (30) is switched to the closed position;
(b) monitoring pressure by the pressure sensor (70) during movement of the pipetting probe (24);
(c) stopping movement of the pipetting probe (24) upon detecting a pressure difference above a predetermined pressure threshold and switching the venting valve (30) to the open position to equilibrate the pressure difference, and/or
(d) continuing moving the pipetting probe (24) towards the end position (28, 28') while the venting valve (30) is switched to the closed position, and aspirating at least a portion of the liquid (1) when the pipetting probe (24) has reached the end position (28, 28').

12. The automated method according to claim 11, wherein step (c) comprises performing a probe environment discrimination test, and wherein switching the venting valve (30) to the open position is performed only upon detecting a gaseous probe environment in the probe environment discrimination test.

13. The automated method according to claim 11 or 12, further comprising step (e) of switching the venting valve (30) to the closed position, removing the pipetting probe (24) from the liquid container (10) and washing the pipetting probe (24) in the wash station (60).

14. The automated method according to claim 13 comprising performing step (f) upon performing step (c) and step (e), wherein step (f) comprises performing steps (a), (b), (c) and/or (d).

15. The automated method according to any one of claims 10 to 14 comprising switching a probe valve (20) installed between the pipetting probe (24) and a venting conduit (32) to a closed position, switching a cleaner valve (50) to an open position, and providing cleaning solution (56) from a cleaning solution reservoir (54) through a cleaning conduit (52) and a probe conduit (22) into the venting conduit (32).
